(19) Europäisches Patentamt
European Patent Office
Office européen des brevets

(11) **EP 4 459 505 A1**

(12) **EUROPEAN PATENT APPLICATION**

(43) Date of publication:
**06.11.2024 Bulletin 2024/45**

(21) Application number: **23190127.3**

(22) Date of filing: **07.08.2023**

(51) International Patent Classification (IPC):
***G06N 3/04*** *(2023.01)* ***G06N 5/045*** *(2023.01)*
***G06N 20/10*** *(2019.01)*

(52) Cooperative Patent Classification (CPC):
**G06N 3/04; G06N 5/045;** G06N 20/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.05.2023 DE 102023204095**

(71) Applicant: **Continental Automotive Technologies
GmbH
30175 Hannover (DE)**

(72) Inventors:
• **Motzkus, Franz
81739 München (DE)**
• **Hellert, Christian
81739 München (DE)**

(74) Representative: **Continental Corporation
c/o Continental Automotive Technologies GmbH
Intellectual Property
Putzbrunnerstr. 69
81739 München (DE)**

(54) **APPARATUS, COMPUTER PROGRAM AND METHOD FOR TESTING A NEURAL NETWORK FOR A CONCEPT**

(57) Embodiments of the present disclosure relate to an apparatus (600), a computer program, and a method (100) for testing a neural network for a concept. The method provides for passing an output of the neural network backwards through the neural network and, in doing so, processing one or more attributions of the concept layer based on the CAV to obtain a projected attribution. As well, the method suggests testing the neural network for the concept using the projected attribution.

FIG 3

## Description

### Technical field

Embodiments of the present disclosure relate to an apparatus, a computer program, and a method for testing a neural network for a concept.

### Background

Emerging advancements in eXplainable Artificial Intelligence (XAI) progressively shift our understanding of neural networks (NNs) from pure black-box models to more interpretable systems, a user might even interact with to better comprehend model decisions.

While Deep Neural Networks (DNNs) have originally been introduced as black-box models due to their complexity and non-linearities, an increasing number of research works in the field of XAI seek to make DNN decision-making processes more transparent and comprehensible. Although objections are raised about whether XAI approaches can fully encapsulate the internal model reasoning process, the advantages of explaining model decisions have been shown in various cases ranging from simply explaining a single model output to finding erroneous model behavior and even improving and correcting the model itself. Especially for safety-critical applications in, e.g., autonomous mobility or the medical field explaining and verifying the used DNN models is a key limitation in deploying the models in practice. Furthermore, legal regulations such as the ISO 26262 Functional Safety standard and the General Data Protection Regulation (GDPR) in the European Union even demand transparency and interpretability of Artificial Intelligence (AI) modules for safe and ethical use. Traditionally there are two main directions in XAI: Local and global explainability.

Local explainability methods focus on model decisions for single inputs and highlight the importance of input units or regions, while global explainability methods provide a broader view in exhibiting more general model behavior applicable to all inputs. Local XAI methods seek to provide transparency to a model decision regarding a single input and use local attribution methods to compute an attribution score for each input unit/part. Such methods provide that the gradient can directly be used to show, which units the model is most sensitive to. However, thus, results of local explainability methods are restricted to single neurons or channels.

Global XAI examines the model more generally, focusing on general assumptions about the learned feature representations and encodings of certain model parts like single neurons. Findings regarding global explanations are typically made from processing larger data subsets and observing the interactions inside the model over multiple different, but related samples. Global explainability methods rely on linear classification in the latent space and, thus, may not consider an overlap of different concepts in the latent space.

XAI approaches may particularly exhibit one or more of the following drawbacks:
Some approaches rely on concepts encoded in a single neuron or a single channel. The concept space is therefore severely restricted to single neurons / channels in the latent space.

Additionally, concepts are based on human interpretation of these units.

XAI approaches may split the concept into subspaces or into channels, which is a limitation because concepts might share information and also might (semantically) overlap.

Artificially/ad-hoc defined concepts(&biases) are currently not included in local concept-based attribution methods.

Biases can hardly be locally explained pixel-exact using current methods.

Hence, there may be a demand of an improved approach of testing neural networks for a concept.

This demand may be satisfied by the subject-matter of the appended independent claims. In particular, embodiments of the present disclosure may overcome one or more of the above mentioned drawbacks. Optional advantageous embodiments are disclosed by appended dependent claims.

### Summary

Embodiments of the present disclosure provide a method for testing a neural network for a concept. The method comprises obtaining a concept activation vector (CAV) of the neural network for a predefined concept. Further, the method provides for passing an output of the neural network backwards through the neural network and, in doing so, processing one or more attributions of the concept layer based on the CAV to obtain a projected attribution. As well, the method suggests testing the neural network for the concept using the projected attribution. In this way, the proposed approach allows to detect whether the (self-defined) concept has been used during model inference and localize it in an input space of the neural network. In doing so, the CAV allows to consider multiple channels when passing the output backwards through the neural network, also referred to as "backpropagation", and, thus, allows for more interpretability of the neural network. In practice, the proposed approach can be used to test, whether the neural network features a certain concept, and/or to "debug" neural networks on a semantic level, e.g., for post-hoc model correction.

As well, the proposed approach is suitable to visualize a relevance of a local model bias for single model decisions.

The skilled person having benefit from the present disclosure will appreciate that the proposed approach is not limited to any specific concept but may be applied to various concepts. So, any possible (user-defined) concept can be used.

In practice, the attributions may be indicative of relevancies for the concept. In this way, an impact of neurons on the output may be determined.

The output of the neural network (for the backpropagation) may comprise a general model output or a filtered model output. For computing the attributions, all outputs, e.g. containing also multiple detections of one object, of the neural network can be used to obtain the explanations. Or the filtered outputs, e.g. via Non-Maximum Suppression, can be used to reduce computing resources.

By projecting the relevance based on the CAV, information related to the encoded concept is retained, while other information is discarded. In this way, multiple neurons and channels contributing to a concept may be considered for a more accurate and reliable detection of concepts in the neural network.

The skilled person having benefit from the present disclosure will appreciate that, based on the proposed approach, the neural network may be checked for the concept in different ways.

In some embodiments, testing the neural network for the predefined concept comprises quantitative testing based on an attribution strength of the projected attribution (in a target layer). As the skilled person will understand, the projected attribution may differ from a neutral attribution (if the concept is not implemented/encoded) if the projected attribution is based on an encoded concept. Hence, an attribution strength is quantitatively higher, when the concept, for which the neural network is tested, is implemented than if it is not. The strength of the attribution can hereby be measured using an arbitrary metric, e.g., statistical measures as the mean, variance, or the sum of attribution, as a missing concept should lead to neutral attributions. Accordingly, the neural network can be tested for the concept based on the metric or selected statistical measure. So, e.g., in practice, if the value is high enough, e.g., higher than an appropriate predefined threshold for the selected measure, it is assumed that the concept is implemented. Otherwise, if no statistically significant deviation exceeding the threshold is noted, it may be assumed that the concept is not implemented in the neural network. In this way, the neural network can be tested for missing concepts, e.g. to implement the missing concepts. Also, implemented concepts may be verified, e.g., for quality control to make sure that predefined standards are met. Furthermore, the neural network can be tested for the usage of misleading or inadvertent concepts, e.g., for quality control to make sure that spurious data correlations are not included. Using the aforementioned statistical testing, the neural network can be checked automatically and deterministically for concepts based on statistical deviations in the CAV-projected attributions.

In some embodiments, the method comprises passing the projected attribution further backwards through the neural network to obtain an outcome at an input layer of the neural network and testing the neural network comprises testing the neural network for the predefined concept based on the outcome of the input layer. For this, the input and the outcome may be provided for a manual comparison by a human to see if an object or feature of the concept is included in the input and, if so, if it is retained in the outcome or not. Then, it is assumed that the concept is implemented if parts of the input are discarded while concept-related features are retained in the outcome.

The skilled person having benefit from the present disclosure will apricate that the proposed method may be implemented as a computer program. Embodiments of the present disclosure accordingly provide a computer program comprising instructions which, when the computer program is executed by a computer, cause the computer to carry out the method of the present disclosure.

The method of any one of the preceding claims, wherein passing the output backwards through the neural network comprises applying a gradient-based backpropagation technique. In practice, e.g., layer-wise relevance propagation or any other gradient-based backpropagation technique is applied.

As well, the proposed approach may be implemented in an apparatus. Accordingly, embodiments of the present disclosure provide an apparatus comprising one or more interfaces for communication and a data processing circuit configured to execute the proposed method.

Further, embodiments are now described with reference to the attached drawings. It should be noted that the embodiments illustrated by the referenced drawings show merely optional embodiments as an example and that the scope of the present disclosure is by no means limited to the embodiments presented:

Brief description of the drawings:

Fig. 1  schematically illustrates a flow chart of an embodiment of a method for testing a neural network for a concept;

Fig. 2  schematically illustrates the extraction and application of the CAV;

Fig. 3  schematically illustrates a forward pass and backward pass through the neural network;

Fig. 4  shows a flow chart schematically illustrating the generation of the CAV;

Fig. 5  shows a flow chart schematically illustrating an exemplary embodiment of the proposed approach;

Fig. 6  shows a block diagram schematically illustrating an apparatus according to the proposed approach.

Detailed description of the drawings:

Concept-wise Relevance Propagation (CRP) provides glocal (global and local) explanations by applying concept maskings to the latent space during layerwise relevance propagation.

While the computation of pixel-exact attribution scores with LRP has been proven useful in numerous applications, extending the method to concept level with CRP enables new possibilities on combining global and local approaches in XAI. CRP uses a masking in the latent space of a DNN model to filter out information in the backward pass, that is not propagated through a certain channel or neuron. As a result of this, the computed explanations consist only of information, that has been passed through this channel. Therefore, results of CRP may not fully encode a human-understandable concept, but only parts of it and may disregard interactions of multiple channels. Hence, further approaches from global XAI like relevance maximization may be required to make the encoding of single channels or even neurons is made human-interpretable.

The subject-matter of the present disclosure contributes and extends this work by combining global implicitly/ad-hoc defined concepts with local attribution methods like LRP.

Further details of the proposed approach should now be laid out in more detail with reference to the drawings.

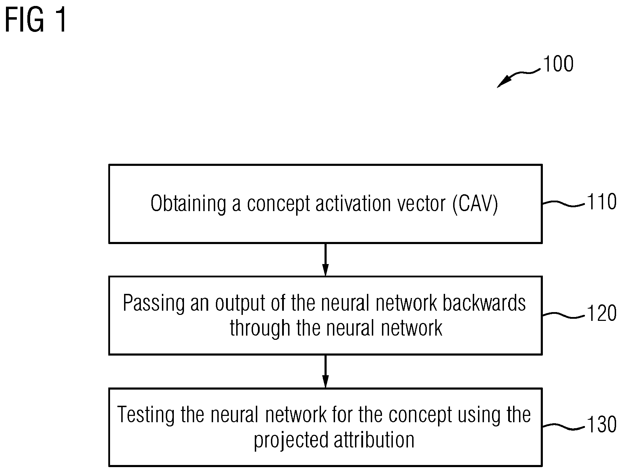

Fig. 1 shows a flow chart schematically illustrating a method 100 for testing a neural network for a concept. In the present context, the concept may be understood as a higher-level representation or abstraction which represents a meaningful pattern, feature, or semantic structure. In practice, concepts refer to features (e.g., tires, eyes, face, clouds, and/or the like) which are used by the neural network to obtain higher-level predictions (e.g., pedestrian, vehicle, and/or the like). In automotive applications, the neural network, e.g., detects that the concept "wheel" is fulfilled for an object (i.e., that the object has at least one wheel) and may therefore assume that the object is a vehicle. It is noted that the proposed approach may be applied for different neural networks but particularly for deep neural networks (DNNs).

One idea of the proposed approach is to apply a concept activation vector of the concept, for which the neural network is tested, to consider multiple neurons contributing to the concept.

Accordingly, method 100 comprises obtaining 110 a CAV of the neural network for a predefined concept. The CAV can be extracted by learning a linear separation in the latent space of the neural network between concept samples exhibiting the concept and other samples. In doing so, a classification boundary between activations for the concept samples and the other samples can be obtained. The CAV is then a vector orthogonal to the classification boundary. Appropriate concept samples, e.g., are obtained by mining them from a plurality of samples or from a data base, as laid out in more detail later. In practice, the CAV is determined for a so-called "concept layer", e.g., a layer where a linear separation/boundary with a desired accuracy can be obtained.

Further, method 100 comprises passing 120 an output of the neural network backwards through the neural network. For this, an appropriate backpropagation may be applied to the output. In doing so, the output may be passed from an output layer of the neural network to an input layer of the neural network.

According to the proposed approach passing the output backwards through the neural network comprises processing one or more attributions of the concept layer based on the CAV to obtain a projected attribution. In doing so, the attributions may be weighed and/or filtered using the CAV. In this way, attributions contributing to the concept may be retained and other attributions may be discarded. In this way, the other attributions which are not or less relevant for the concept (than the ones contribution to the concept) are sorted out from the projected attribution. In practice, the CAV is applied in the concept layer. So, ideally only attributions relevant for the concept are passed further backwards through the neural network from the concept layer. In this way, the projected attribution only includes attributions relevant for the concept. Accordingly, if the concept is implemented in the neural network (i.e., if the neural network is configured to distinguish between objects indicative of the concept and other samples), the projected attribution ideally only includes attributions relevant for the concept, provided that the neural network is applied to a sample indicative of the concept. So, the projected attribution indicates whether the concept is implemented in the neural network or not.

Accordingly, method 100 comprises testing 130 the neural network for the concept using the projected attribution. For this, the projected attribution may be passed further backwards through the neural network to the input layer of the neural network and the neural network is tested for the concept based on an outcome of the neural network at the input layer. Alternatively, or additionally, the neural network is tested for the concept based on a variance of the projected attribution, as laid out in more detail later.

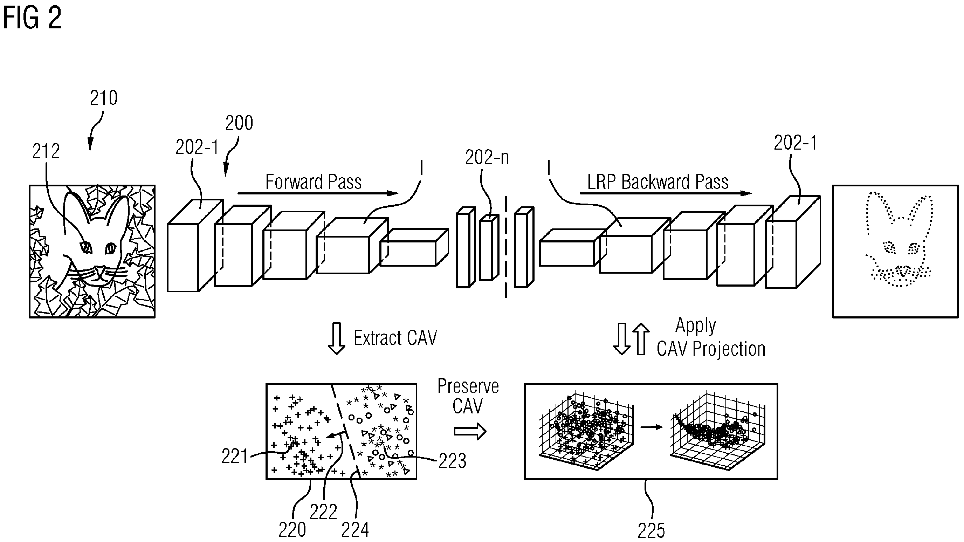

In this way, the proposed approach allows to verify if the concept is implemented in the neural network or not. In practice, the proposed approach, e.g., is applied to a neural network for object recognition and for a concept related to a visual feature of objects, as outlined in more detail with reference to Fig. 2.

Fig. 2 schematically illustrates a use case of the proposed approach for a neural network 200 for object recognition. As can be seen from Fig. 2, the neural network 200 may exhibit an arbitrary number of n layers 202-1 ...202-n including an input layer 202-1 and an output layer 202-n. In the present example, the neural network 200 is configured for object recognition. Accordingly, concepts of the neural network, e.g., refer to visual features of objects. In practice, for recognizing a cat's face, neural networks can be configured to recognize corresponding visual features, e.g., eyes, muzzle, ears, and/or whiskers. So, a dedicated concept may be implemented for such features. In the application, the neural network, then, e.g., classifies the object as a cat if the object exhibits a predefined combination or all visual features of the concepts. In practice, such concepts may be reused for the recognition of other objects. The concept "eyes", e.g., may be reused for the recognition of faces of other living beings. Therefore, it may be desired to check if the concept "eyes" is implemented in the neural network 200 to make sure that living beings are detected reliably.

In context of CAVs, the skilled person will understand that, for this, the neural network 200 may be applied to various objects/samples with and without eyes to identify the concept layer I where the neural network 200 distinguishes (significantly or the most) between objects with and without eyes. Then, a (linear) boundary 224 between concept attributions 221 of samples exhibiting the concept (here: eyes) and attributions 223 of other samples is obtained in the latent space 220 of the concept layer $l$. For this, e.g., a support vector machine (SVM) or equivalent approaches may be applied. Subsequently, a vector orthogonal to the boundary 224 is determined to obtain a CAV 222 according to the proposed approach.

The neural network 200, then, is tested for the concept "eyes" based on the CAV 222. For this, a forward pass is applied where an image 210 exhibiting the concept is passed forward through the neural network. In the present example, the image 210 shows a cat and, particularly, its face and eyes.

Then, a backward pass is applied where an output of the neural network 200 is passed backwards through the neural network 200. In doing so, the output, e.g., is passed from the output layer 202-n to the input layer 202-1. The output, e.g., is indicative of a class prediction - here, e.g., "cat" or "animal".

The skilled person having benefit from the present disclosure will appreciate that various backpropagation techniques may be applied to this end. In practice, e.g., LRP may be applied. Corresponding embodiments, therefore, may be understood as "CAV-LRP". However, the skilled person will appreciate that also any other (gradient-based) backpropagation technique may be applied.

As the skilled person understands that LRP suggests a backward pass of a relevance or relevancies (used synonymously in context of the present disclosure). Accordingly, the attributions include or correspond to one or more relevancies for the concept. So, applying the proposed approach, relevancies are passed backwards from the output layer to the concept layer $l$. In doing so, according to the proposed approach, the CAV 222 is applied to obtain the projected attribution.

Thereby, e.g., a linear projection on the relevancies is performed in the latent space. To this end, a masking algorithm, as in CRP, can be adapted accordingly based on the CAV 222. So, in other words, a channel mask can be handled as a linear direction in latent space, as laid out in more detail below. The CAV 222 is thereby used for computing and encoding meaningful linear concept vectors in latent space that specify the direction of the linear projection. Choosing a specific layer $l$ of a DNN the model function $f(x)$ can be rewritten in the parts $f(x) = h(g(x))$. The projected attribution, then, is indicative of a linear projection of the computed relevance R1 of feature layer $l$ in the direction $v^l_{CAV}$ of the CAV 222:

$$R^l_{CAV} = R^l \cdot v^l_{CAV} \qquad (1)$$

By projecting the relevance onto the CAV 222, information related to the encoded concept is retained, while other information is discarded, as indicated by diagram 225 in Fig. 2. It should be noted that the constraint of relevance conservation between two layers $l$ and $l - 1$ does not necessarily hold due to the projection. This is thus reasonable, as the projection can be seen as a filter removing non-concept information and the respective relevance.

The projected attribution, then, can be used for checking the neural network 200 for the concept.

For this, the projected relevance $R^l_{CAV}$ may be propagated back to the input layer 202-1 as before following the rules of LRP.

In this way, an outcome 230 of the backward pass can be obtained from the input layer 202-1. The proposed use of the CAV 222 provides that the outcome 230 is indicative of the concept if it was present in the image 210. In the present example, e.g., pixels of the cat's eyes 212 have been retained in the outcome. This proves that the concept has been used to achieve the output used for the backward pass. Accordingly, it can be verified that the concept is established in the neural network 200. Otherwise, if the outcome does not indicate the concept, e.g., if the outcome did not exhibit the cat's eyes, it is assumed that the concept is not implemented in the neural network 200. In this way, missing concepts can be identified, e.g., in order to train missing concepts afterwards to meet a predefined standard. In practice, the outcome may be analyzed manually or automatically using concept localization, as laid out in more detail later.

Additionally or alternatively, the implementation of the concept may be verified (directly) based on the projected attribution, e.g., by its variance, as outlined above.

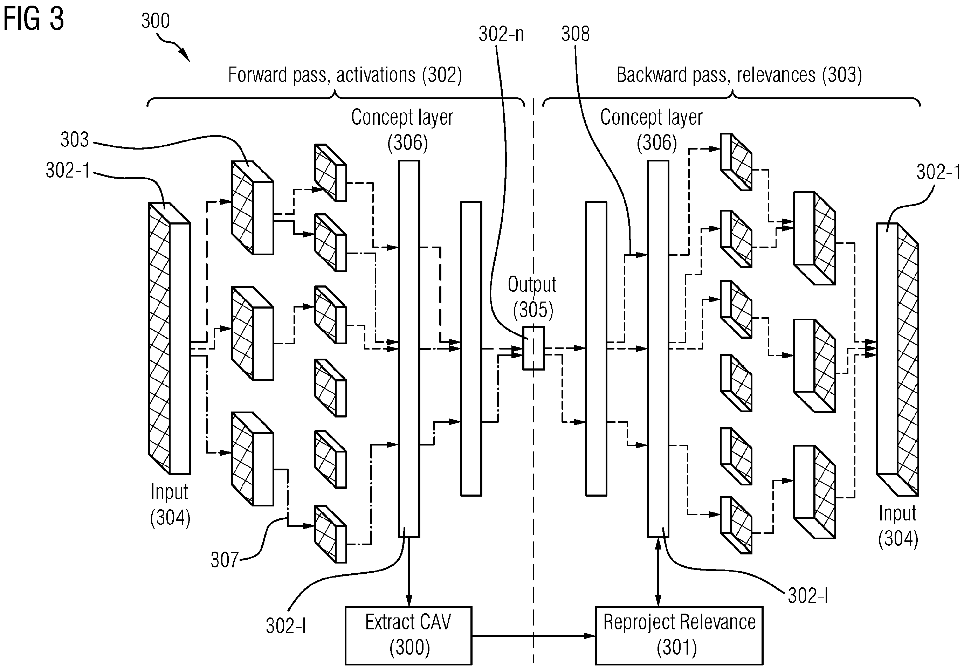

Further details regarding the forward and backward pass are outlined in more detail below with reference to Fig. 3.

Fig. 3 shows another example of a neural network 300 exhibiting a (natural) number n of layers 302-1 ... 302-n including a concept layer 302-l. As can be seen, each of the layer has one or more neurons 303. In the forward pass, an input is passed from an input layer 302-1 to an output layer 302-n. In doing so, activations of neurons 303 along specific (parallel) channels occur, as indicated by arrows, while other neurons may stay inactive. In practice, those activations differ in their strength (indicated by a specific value), as indicated by the thickness of the arrows. As previously mentioned, examples of the neural network, e.g., are configured for object recognition. Accordingly, the input may comprise an image and the output of the neural network 300 at the output layer 302-n, e.g., indicates a class of an object in the image.

After the forward pass, according to the proposed approach, the backward pass is applied to the output to propagate relevancies of the attributions backwards through the neural network 300. As can be seen from dashed arrows on the right-hand side of Fig. 3, the relevancies are propagated along various parallel channels between the input layer 302-1 and the output layer 302-n. In doing so, according to the present approach, the CAV extracted from the concept layer 302-l is applied to determine a projected attribution in the backward pass. In this way, channels contributing to the concept of the CAV are retained while others are discarded.

For object detection and image segmentation models L-CRP has been introduced, which extends CRP to single detections and segmentations in localization models. Instead of using existing approaches, which use a version of contrastive LRP under the debatable assumption, that LRP explanations are not class-specific, it is proposed that the standard rule set of LRP is used. While other concepts restrict their method to single predictions and handle each detected object individually as a classification decision and initialize the backward pass specifying single object classes, so that the relevance for multiple objects of the same class is computed simultaneously, the present approach provides multiple options with different granularity for initializing the backward pass. The proposed approach can be used in the following ways:

- Option A: Applying the backward pass to the raw output of a model of the neural network 200/300 before post-processing is used for explaining a general usage of the concept by the model.

- Option B: Applying the backward pass to the output of the model after post-processing including filtering on the predicted detections by the model and restricting the explanation of the concept usage to the predicted object.

- Option C: Applying the backward pass on a filtered outcome filtered for a specified class such that all concept detections for object detections related to this class are explained.

- Option D: By specifying a single detection such that concept-related information is explained for the detection of a single detection. However, it should be noted that LRP attributes relevance to features relative to each other so that strong activating concept detections might superimpose the detection of weaker concept detections in computed explanations.

According to a further aspect, the present disclosure relates to an approach for detecting the concept in the outcome of the backward pass at the input layer numerically or automatically. So, the proposed method may further provide for a detection of the concept, as described in more detail below. For this, the present approach provides for locally detecting and explaining concepts for object detectors on single inputs.

For concept detection, i.e., for determining if a concept is applied in the neural network, concept (attribution) localization may be applied.

For the localization of the concept, different localization measures can be applied. For this, scores of the pointing game and attribution localization may be complemented by an additionally introduced ground truth concept coverage.

As the present approach can be used for explaining the detection of a certain concept within an input, it is proposed to measure localization capabilities in explanations (for Option A) of the proposed approach. For this, an attribution localization metric which is configured to measure a ratio of positively attributed relevance (within a binary class mask) to an overall positive relevance may be used. The concept attribution localization $\mu_c$ regarding the concept $c$ is, e.g., defined as

$$\mu_c = \frac{CR_{in}^+}{CR_{total}^+} \quad (2)$$

with $CR_{in}^+$ denoting positive attributions regarding concept $c$, which fall within an (predefined) annotated concept area (where the concept is localized) and $CR_{total}^+$ denoting overall positive attributions of the explanation regarding concept $c$. In some embodiments, a weighted version depending on the size of the concept area in the input can be computed. The concept attribution localization measure is based on the assumption, that the concept information in the input is used by the model to detect this concept. The implementation of the concept, then, may be confirmed if $\mu_c$ is greater or equal to a predefined threshold for $\mu_c$.

As the concept attribution localization only measures whether the computed explanation is associated locally with the given concept annotations, an additional measure may be introduced for measuring whether the complete concept information is attributed by the proposed approach. Therefore, a Ground Truth Concept Coverage *GTCov* which indicates a ratio of positively attributed ground truth concept annotation is introduced. This measure assumes that - in object detection and semantic segmentation - all appearances of a concept should ideally be positively attributed. It is formulated as:

$$GTCov_c = \frac{1}{|c|} \times |CR_{in}^+| \qquad (3)$$

with $|c|$ denoting a size of a concept mask annotation, i.e., the size of the predefined annotated concept area, and $|CR_{in}^+|$ denoting the number of positively attributed pixels by the CAV 222. The implementation of the concept, then, may be confirmed if $GTCov_c$ is greater or equal to a predefined threshold for $GTCov_c$.

The proposed approach provides the possibility of explaining any concept that can be formulated as a direction of a CAV locally. To further use this approach for not only localizing the concept in an input but also detecting whether a concept is present in an input a CAV relevance score $\tau$ is introduced as a measure of concept detection. Projecting the relevance in layer *l* in CAV direction the mean $\mu$ of the absolute relevance can be measured assuming that the relevance in CAV direction is higher for samples containing the specified concept than for other samples.

$$\tau = \mu(|v_{CAV}^l \cdot R^l|) \qquad (4)$$

Based on the CAV relevance score, a threshold can be computed using a linear classifier that distinguishes between the scores of samples containing the concept and those not containing the concept. The linear classifier, then, may be used to distinguish between such samples for checking the neural network for the implementation of the concept. In embodiments, this, e.g., allows to make sure that only samples including the concept are considered when checking for the concept.

In this way, the proposed approach allows to test the neural network for the concept not only qualitatively but also quantitatively with respect to multiple baselines on multiple object detection models. Further, the proposed approach can visualize and explain the embedding of (ad-hoc defined) concepts in a model of the neural network.

As the skilled person will understand, the CAV also considers bias of the neural network. Accordingly, the proposed approach also allows to detect bias in the recognition of concepts, e.g., whether the neural network (accidentally) uses an undesired feature in the recognition of a visual feature.

In embodiments, the approach, e.g., allows to visualize model bias localized in single samples for user model inspection. A user of the proposed approach, in this way, may determine if and how the model (i.e., the trained neural network) is biased. In practice, the user then may utilize the information to understand the neural network and to finally detect failures/biases.

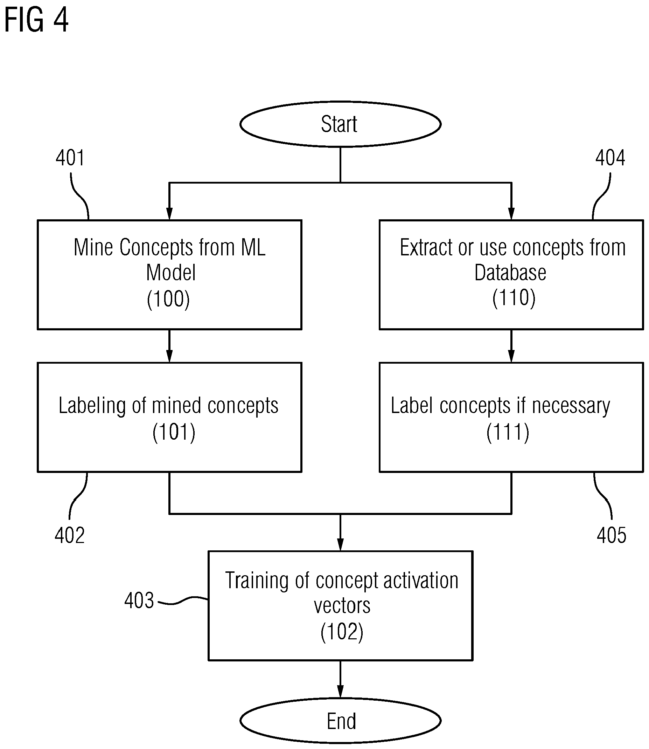

In applications of the present approach, the concept may need to be predefined or created prior to checking the neural network for this concept. There are different ways the concept can be created, as outlined in more detail with reference to Fig. 4.

As can be seen from the flow chart depicted in Fig. 4, in embodiments, the concept can be created in two different ways.

According to a first option, the concept, in a first step 401, can be mined from the neural network by using unsupervised learning methods like Automatic Concept Based Explanations (ACE) or Invertible concept-based explanations (ICE), that try to find visually similar patterns in the input images. This is followed by a second step 402 including a human evaluation where the mined concepts are cleaned and semantic meanings are attached.

Alternatively, according to a second option, the concept, in a first step 404, can be obtained from or using a database that contains concepts. Then, in a second step 405, the concept may be labelled, e.g., by a (human) user.

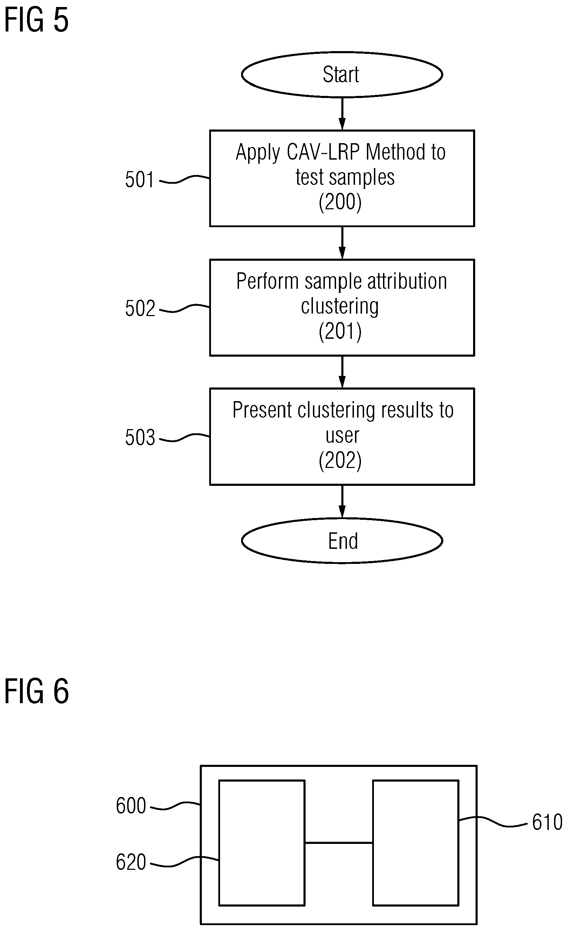

Then, the CAV can be trained in consideration of the defined concept using, for example, a linear classification model. Subsequently, the CAV may be applied as proposed. In practice, the proposed approach can be applied for multiple samples to verify more reliably if the concept is implemented, as outlined in more detail with reference to Fig. 5.

Fig. 5 shows a flow chart schematically illustrating an exemplary application of the proposed approach.

As can be seen from the flow chart, embodiments of the present approach may provide for applying the present approach for multiple test samples in a first step 501. The test samples may contain the same concepts but does not need to. The method will then show if the concepts (by using the CAVs) are present in the test sample.

Then, in a second step 502, sample attribution clustering is performed. Hereby, a clustering approach is applied to the computed attribution maps, so that extracted clusters describe visually similar patterns in the attribution maps. Similar patterns are formed into clusters and can easily be inspected.

Subsequently, in a third step 503, the clustering results, e.g., the clusters, are presented to a user for evaluation. Instead of investigating the results for each data point independently, the skilled user can now investigate the clusters while each cluster describes a certain pattern in the attribution maps. Ideally, this pattern can be interpreted as a semantic general meaning by the user.

As the skilled person having benefit from the present disclosure will appreciate, the proposed approach may be applied for different concepts.

As object detection models can detect multiple objects of multiple classes, the output of these models is accordingly more complex than a classification case where only one class is determined for an input. While other concepts handle each bounding box prediction individually as a classification problem, it is proposed to extend the approach as described above by initializations of the LRP backward pass which allows explaining of single detections as well as explaining the (raw) model output, e.g., the output before Non-Maximum Suppression (NMS)-filtering. The proposed approach thereby provides a high level of individualization with respect to the desired explanation task. Thus, each initialization induces a different semantic meaning, which is further reflected in the application of the proposed approach.

As the skilled person will appreciate, the proposed approach can be used in multiple settings and for various concepts. In practice, it may be used for verifying/explaining a certain concept within a certain bounding box prediction (Option D). Similarly, the proposed approach allows to verify/explain a pre-defined concept within multiple bounding box predictions.

Results of the application of the proposed approach may be particularly used to explain concept-relations with respect to a certain class (Option C), i.e., how concepts impact the recognition of certain classes. As the skilled person will understand, the proposed approach can be also applied to bounding box predictions after the NMS-filtering (Option B). Initializing the output with the raw unfiltered output of the model (Option A) can highlight, which parts of the input have in general been used by the model for detecting or not detecting objects. Applying the proposed approach to this option thereby highlights, how this concept has in general been perceived and used by the model.

The quality of the explanations depends on the CAV, as the concept information itself needs to be linearly embedded in the specified layer and the CAV needs to be properly trained.

Comparing our method with CRP it is apparent, that our approach is more generally applicable, as we do not restrict the used concepts to the encoding of single channels or neurons of the model. Therefore, every possible concept which can be encoded with a CAV can be used ad-hoc, which allows for bias exploration. Mined concepts can in general be used by transferring them into linear CAV vectors, while CRP can be seen as the special case, where only one channel of a concept is chosen. As the CRP concept definition is not bidirectional with respect to completeness, their concepts can be linked to channels and neurons inside the model, but do not necessarily encapsulate the complete information regarding the semantic (global) concept, whereas the proposed approach focuses on the complete information (included in the CAV), which is discriminative with respect to the appearance of the concept.

So, in comparison with other approaches, the proposed approach addresses the previously mentioned drawbacks by opening up the computation of pixel-exact concept-based explanations for single model inputs to any concept, that can be linearly encoded in the latent space of a neural network. With this approach, arbitrarily many channels and neurons can be combined in the concept definition. The present disclosure further suggests an approach for detecting and localizing concepts and biases for single inputs and considering a clustering to present the concept attributions to users.

As the skilled person will understand, the proposed approach is able to detect whether a self-defined concept has been used during the model inference and localize it in input space. In doing so, any possible (user-defined) concept can be used. So, the proposed approach, e.g., provides a means to "debug" neural networks on a semantic level. Since, the CAV also considers model bias, this approach further allows to visualize (local) model bias (for single model decisions).

In conclusion, the proposed approach may assist with post-hoc model correction and brings more interpretability to this whole process.

In practice, the proposed approach can be implemented in a computer program or an apparatus.

So, embodiments may provide a computer program comprising instructions which, when the computer program is executed by a computer, cause the computer to carry out the proposed method.

Further details of such an apparatus are described with reference to Fig. 6.

Fig. 6 shows a block diagram schematically illustrating an embodiment of an apparatus 600 according to the proposed approach.

The apparatus comprises one or more interfaces 610 for communication and a data processing circuit 620 configured to execute the method according to the present disclosure.

In embodiments, the one or more interfaces 610 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 620 may correspond to or comprise any type of programable hardware. So, examples of the data processing circuit 620, e.g., comprise a memory, microcontroller, field programable gate arrays, one or more central, and/or graphical processing units. To execute the proposed method, the data processing circuit 620 may be configured to access or retrieve an appropriate computer program for the execution of the proposed method from a memory of the data processing circuit 620 or a separate memory which is communicatively coupled to the data processing circuit 620.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

**Claims**

1. A method (100) for testing a neural network (200, 300) for a concept, the method comprising:

   obtaining (110) a concept activation vector, CAV, (222) of the neural network for a predefined concept;
   passing (120) an output of the neural network backwards through the neural network, wherein passing the output backwards through the neural network comprises processing one or more attributions of the concept layer based on the CAV to obtain a projected attribution; and
   testing (130) the neural network for the concept using the projected attribution.

2. The method of claim 1, wherein the attributions are indicative of relevancies for the concept.

3. The method of claim 1 or 2, wherein the output of the neural network comprises a general model output or a filtered model output.

4. The method of claim 3, wherein testing the neural network for the predefined concept comprises testing the neural network for the predefined concept based on a variance of the projected attribution.

5. The method of any one of the preceding claims, wherein the method comprises passing the projected attribution further backwards through the neural network to obtain an outcome of at an input layer of the neural network, and wherein testing the neural network comprises testing the neural network for the predefined concept based on the outcome of the input layer.

6. The method of claim 5, wherein testing the neural network for the predefined concept comprises comparing the outcome with an input to the neural network, wherein the input is indicative of the predefined concept.

7. The method of any one of the preceding claims, wherein passing the output backwards through the neural network comprises applying a gradient-based backpropagation technique.

8. A computer program comprising instructions which, when the computer program is executed by a computer, cause the computer to carry out the method of any one of the preceding claims.

9. An apparatus (600) comprising:

   one or more interfaces (610) for communication; and
   a data processing circuit (620) configured to execute the method of any one of the claims 1 to 7.

FIG 1

100

| Obtaining a concept activation vector (CAV) | 110 |

↓

| Passing an output of the neural network backwards through the neural network | 120 |

↓

| Testing the neural network for the concept using the projected attribution | 130 |

## FIG 2

Forward Pass

LRP Backward Pass

Extract CAV

Apply CAV Projection

Preserve CAV

EP 4 459 505 A1

FIG 3

Forward pass, activations (302)

Backward pass, relevances (303)

Concept layer (306)

Concept layer (306)

Output (305)

Extract CAV (300)

Reproject Relevance (301)

Input (304)

Input (304)

EP 4 459 505 A1

12

## FIG 4

Start

401

404

Mine Concepts from ML
Model
(100)

Extract or use concepts from
Database
(110)

Labeling of mined concepts
(101)

Label concepts if necessary
(111)

402

405

403

Training of concept activation
vectors
(102)

End

## FIG 5

```
            ┌──────────┐
            │  Start   │
            └──────────┘
                 │
                 ▼
     ┌───────────────────────────┐
     │  Apply CAV-LRP Method to  │
501  │      test samples         │
     │         (200)             │
     └───────────────────────────┘
                 │
                 ▼
     ┌───────────────────────────┐
     │  Perform sample attribution│
502  │        clustering         │
     │         (201)             │
     └───────────────────────────┘
                 │
                 ▼
     ┌───────────────────────────┐
     │  Present clustering results to│
503  │           user            │
     │         (202)             │
     └───────────────────────────┘
                 │
                 ▼
            ┌──────────┐
            │   End    │
            └──────────┘
```

## FIG 6

```
   ┌─────────────────────────────┐
   │  ┌────────┐     ┌────────┐   │
600│  │        │     │        │   │ 610
   │  │        │─────│        │   │
620│  │        │     │        │   │
   │  └────────┘     └────────┘   │
   └─────────────────────────────┘
```

Europäisches Patentamt

European Patent Office

Office européen des brevets

# EUROPEAN SEARCH REPORT

**Application Number**

**EP 23 19 0127**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAXIMILIAN DREYER ET AL: "Revealing Hidden Context Bias in Segmentation and Object Detection through Concept-specific Explanations", ARXIV.ORG, CORNELL UNIVERSITY LIBRARY, 201 OLIN LIBRARY CORNELL UNIVERSITY ITHACA, NY 14853, 21 November 2022 (2022-11-21), XP091375246, * section 3 * * the second paragraph of the section 4 * * figure 2 * ----- | 1-9 | INV. G06N3/04 G06N5/045 ADD. G06N20/10 |
| A | JESSICA SCHROUFF ET AL: "Best of both worlds: local and global explanations with human-understandable concepts", ARXIV.ORG, CORNELL UNIVERSITY LIBRARY, 201 OLIN LIBRARY CORNELL UNIVERSITY ITHACA, NY 14853, 31 January 2022 (2022-01-31), XP091125831, * section 2.4 * ----- | 1-9 | |

**TECHNICAL FIELDS SEARCHED (IPC)**

G06N

The present search report has been drawn up for all claims

| Place of search | Date of completion of the search | Examiner |
|---|---|---|
| The Hague | 22 January 2024 | Theissing, Simon |

EPO FORM 1503 03.82 (P04C01)